# EUROPEAN PATENT APPLICATION

(11) **EP 1 336 820 A2**
(43) Date of publication of application: **20.08.2003**
(21) Application number: 03250890.5
(22) Date of filing: 13.02.2003
(51) Int. Cl.: G01C 21/34

(54) **Navigation device, method therefor, program therefor, and recording medium with the same program recorded**

(30) Priority: 14.02.2002 JP 2002036931
(71) Applicant: Pioneer Corporation, Meguro-ku, Tokyo (JP)
(72) Inventor: Sakai, Akira, Pioneer Corporation Plant, Kawagoe-shi, Saitama (JP)
(74) Representative: Haley, Stephen

(57) **Abstract**

From a present position recognized by a present position recognizer (15) to a destination recognized by a destination recognizer (16), a moving path is set by a moving path finder (17) based on map data and is stored in a storage, while a map is appropriately displayed on a display portion (8). Whether a diverging position exists, in roads ahead where a vehicle runs on the moving path, within an appointed distance from the present position recognized by the present position recognizer (15) is judged. While using, as an origin, a link ID of a divergent road different from a link ID of the moving path from the diverging position, a presumed moving path to the destination is set by a presumed moving path setting portion (19). Thus, a presumed moving path is preset in case of deviation, whereby swift and satisfactory support can be provided.

## Description

### BACKGROUND OF THE INVENTION

The present invention relates to a navigation device for supporting movement of a movable body to a destination, a method therefor, a program therefor, and a recording medium with the same program recorded.

In recent years, as a navigation device for supporting movement of a movable body such as an automobile to a destination, widely known is a configuration wherein, for example, a moving path from a present position or a starting point to a destination is informed by indication, voice, etc. In addition, as a conventional navigation device, also known is a configuration provided with a rerouting function to, when, for example, an automobile deviates from a moving path, reset a moving path from that point to the destination.

However, when an automobile actually deviates from a moving path, it requires a certain length of time to recognize this deviation and set a new moving path from the point of deviation to the destination. Therefore, until this new moving path is set, there exists a condition where no support is provided for the movement to the destination, therefore, an improvement in convenience has been demanded.

In addition, deviation from the moving path for a reason such as, for example, straying from a route during movement also often occurs. In this case, when rerouting is carried out from the point of deviation by a prior navigation device, this rerouting results in a return to the moving path, namely, a new moving path to make a U-turn and return to the original moving path is rerouted. Accordingly, no support is provided for movement on the new moving path. In addition, in order to support the movement, it becomes necessary to carry out troublesome manipulations to set a new moving path again by inputting, as a destination, a place where the automobile deviates again to stray from the route and to set a moving path by inputting a final destination again after completing various actions, therefore, an improvement in convenience cannot be realized.

Therefore, a configuration can be considered in that, for example, based on a manipulation of a traffic indicator, etc., deviation is predicted in advance and a new moving path when a deviation occurs is preset in advance. Then, upon detection of a deviation, the new preset moving path is informed to swiftly and satisfactorily support moving even when a deviation occurs.

However, in this configuration, a mechanism to predict a deviation is required and the configuration becomes complicated, therefore, an improvement in productivity, downsizing, a reduction in weight, and a reduction in cost, etc., may become difficult.

As mentioned above, in the conventional navigation device, when the movable body deviates from a set moving path, a support for moving becomes impossible until rerouting is completed, thus an improvement in convenience cannot be realized. In addition, prediction of deviation can also be considered, however, the configuration becomes complicated and an improvement in productivity, downsizing, a reduction in weight, and a reduction in cost, etc., may become difficult.

In view of such circumstances, a main object of the present invention is to provide a navigation device which is able to, even when the movable body deviates from the moving path, immediately support moving by a simple configuration, a method therefor, a program therefor, and a recording medium with the program recorded.

A navigation device of the present invention includes: a present position recognizer for recognizing a present position of a movable body; a destination recognizer for recognizing a destination to which the movable body moves; a moving path finder for setting a moving path from the present position recognized by the present position recognizer to the destination recognized by the destination recognizer; and a presumed moving path finder for setting a presumed moving path from a diverging position on the moving path in roads ahead in a moving direction of the movable body along the moving path set by the moving path finder to the destination, via a path different from the moving path.

In this aspect of the invention, a moving path from a present position recognized by the present position recognizer to the destination recognized by a destination recognizer is set by the moving path finder, and a presumed moving path from the diverging position on the moving path in roads ahead in a moving direction of a movable body along the moving path is set by the presumed moving path finder, via a path different from the moving path.

Accordingly, setting of the presumed moving path in case of deviation is carried out before the movable body arrives at the diverging position where the movable body deviates from the moving path. Therefore, even if the movable body deviates from the moving path, the preset presumed moving path can function as a moving path and immediately support moving, whereby stable and satisfactory movement can be obtained and convenience is improved. In addition, since the preset presumed moving path is set in the same way as the setting of the moving path, a special construction to recognize a deviation from the moving path is unnecessary, therefore, the preset presumed path can be set without complicating the configuration. Furthermore, the navigation system can also be utilized in, for example, a server which acquires information via a network and outputs the information to a terminal computer so as to support moving of the vehicle, therefore, an expansion in application can also be promoted.

In the navigation device of the present invention, the presumed moving path finder preferably completes setting of a presumed moving path before the movable body arrives at the diverging position on the moving path.

In this aspect of the invention, a presumed moving path is set before the movable body arrives at a diverging position on the moving path. Accordingly, since a presumed moving path has already been set at a point in time of deviation from the moving path, the presumed moving path can start to function as a moving path from the point in time of deviation and immediately support moving of the vehicle, whereby stable satisfactory running can be obtained and convenience can be improved.

In the navigation device of the present invention, the presumed moving path finder preferably sets a presumed moving path from a diverging position which is on the moving path in roads ahead in a moving direction of the movable body and is nearest from the present position of the movable body.

In this aspect of the invention, a presumed moving path from a diverging position which is on the moving path in roads ahead in a moving direction of the movable body and is nearest from the present position of said movable body is set by the presumed moving path finder. Accordingly, it is unnecessary to set presumed moving paths from all diverging positions on the moving path, it is sufficient to set a presumed moving path in order in line with the moving state of the movable body, therefore, the process load is reduced, thus processing efficiency in the presumed moving path setting can be improved.

In the navigation device of the present invention, the moving path finder preferably searches and sets a moving path based on map data having moving road data concerning a moving roads where the movable body can move, and the presumed moving path finder preferably sets a presumed moving path based on divergence information concerning a diverging position contained in the moving road data of the map data.

In this aspect of the invention, by the presumed moving path finder, a presumed moving path is set based on the divergence information concerning a diverging position contained in moving road data concerning moving path where the vehicle can move in the map data for setting a moving path. Accordingly, since a presumed moving path is set based on the map data used for setting a moving path, a presumed moving path to support moving of a vehicle in response to a deviation can be easily set with a simple configuration.

In the navigation device of the present invention, the moving path finder preferably sets, if it is judged that the present position recognized by the present position recognizer is located on a presumed moving path, the presumed moving path as a moving path.

In this aspect of the invention, if it is judged that the present position recognized by the present position recognizer is located on a presumed moving path, a presumed moving path is set as a moving path by the moving path finder. Accordingly, even if the vehicle deviates from the moving path, since moving of the vehicle is supported by using a preset presumed moving path function as a moving path, it is unnecessary to reset a moving path, therefore, a moving path to swiftly support moving can be obtained by a simple configuration.

In the navigation device of the present invention, the presumed moving path finder preferably releases, if it is recognized by the present position recognizer that the movable body passes through a diverging position of a presumed moving path and moves along a moving path, setting of the presumed moving path.

In this aspect of the invention, if it is recognized by the present position recognizer that the movable body passes through a diverging position of a presumed moving path and moves along a moving path, by the presumed moving path finder, setting of a presumed moving path starting from this passed diverging position is released, that is, for example, the stored presumed moving path is deleted. Accordingly, even if presumed moving paths are set, in order, with running of the vehicle, for example, settings of presumed moving paths which are not used to support moving of the vehicle any longer are released in order, therefore, the load to set presumed moving paths can be reduced, whereby simplification of the configuration and an improvement in processing efficiency to set presumed moving paths can be easily realized.

The navigation device of the aforementioned respective aspects of the invention can be developed into a navigation method, and can also be carried out not only in a movable body such as a vehicle or the like but also in a personal digital assistant, etc., and in such a case, the same effects as the foregoing can be provided.

In addition, the present invention can provide a navigation program to make a computer implement the aforementioned navigation method.

In this aspect of the invention, for example, by installing the navigation program in a general-purpose computer, the computer can be made to implement the aforementioned navigation method, whereby application of the present invention can be greatly promoted.

This navigation program can be carried out as a recording medium in which the same has been recorded so as to be readable by a computer.

In this aspect of the present invention, since the navigation program for implementation of the aforementioned navigation method is recorded on a recording medium, handing of the navigation program is easy, whereby application of the present invention can be greatly promoted.

Further, the computer in the aforementioned method is not limited to a single computer and also includes, for example, a network-like combination of a plurality of computers and an IC such as a microcomputer, etc.
Fig. 1 is a block diagram showing a schematic configuration of an embodiment of a navigation system according to the navigation device of the present invention;
Fig. 2 is a schematic view showing a data structure of map data in the above embodiment;
Fig. 3 is a flowchart showing navigation system operations in the above embodiment; and
Fig. 4 is a flowchart showing operations for preceding rerouting processes in the navigation system operations in the above embodiment.

In the following, an embodiment of the present invention will be described based on the drawings.

### [Configuration of navigation system]

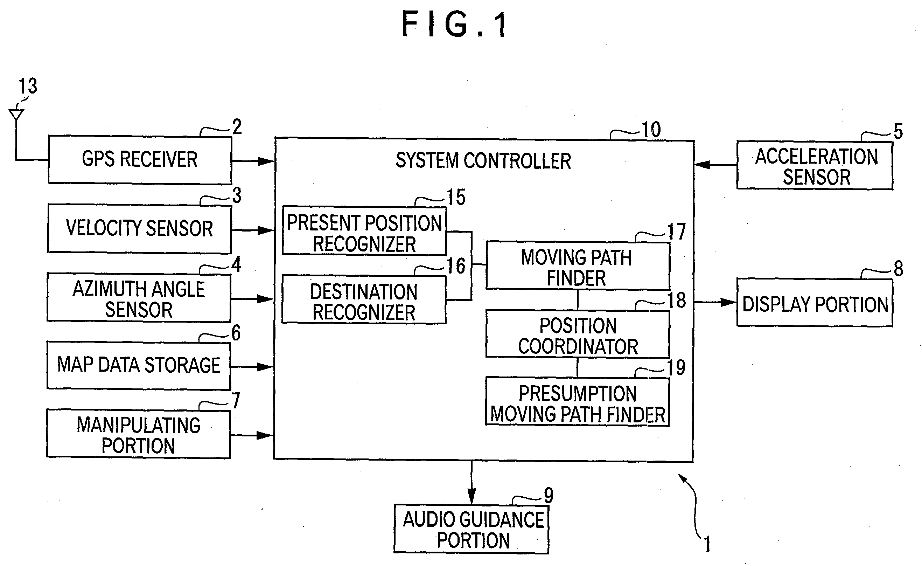

Fig. 1 is a block diagram showing a schematic configuration of a navigation system according to a navigation device of the present invention in the present embodiment.

In Fig. 1, a navigation system 1 is disposed in a vehicle (unillustrated) such as, for example, a passenger vehicle as a movable body. In addition, the navigation system 1 operates by being supplied with electric power from a battery loaded in the vehicle.

The navigation system 1 comprises a GPS (Global Positioning System) receiver 2, a velocity sensor 3, an azimuth angle sensor 4, an acceleration sensor 5, a map data storage 6 as a map data acquisitor, a manipulating portion 7, a display portion 8, an audio guidance portion 9, and a system controller 10 as a navigation device.

To the GPS receiver 2, an antenna 13 is connected. This GPS receiver 2 receives electric navigation waves outputted from a GPS satellite of an artificial satellite (unillustrated) via the antenna 13. Then, the GPS receiver 2 computes a pseudo coordinate value of a present position based on the received signal and outputs the value to the system controller 10 as GPS data.

The velocity sensor 3 is disposed in the vehicle and detects running velocity of the vehicle. This velocity sensor 3 converts the detected running velocity of the vehicle to velocity data based on, for example, a pulse or a voltage and outputs the same to the system controller 10.

The azimuth angle sensor 4 is disposed in the vehicle and has a so-called gyrosensor, and detects an azimuth angle of the vehicle, that is, a running direction in which the vehicle advances. This azimuth angle sensor 4 converts the detected running direction to azimuth angle data based on, for example, a pulse or a voltage, and outputs the same to the system controller 10.

The acceleration sensor 5 is disposed in the vehicle, compares, for example, a gravitational acceleration with an acceleration produced by running of the vehicle, and detects the moving condition of the vehicle in the vertical direction of the up-and-down direction. This acceleration sensor 5 converts the detected moving condition to acceleration data based on, for example, a pulse or a voltage and outputs the same to the system controller 10.

The map data storage 6 readably stores map data such as a road map and additional data required for guiding running of the vehicle (which will be described later). For example, it has a drive to read out map data, additional data, etc., recorded on an optical disk and a magnetic disk such as a DVD-ROM (Digital Versatile Disc - Read-Only Memory) and a hard disk, and appropriately outputs the read-out map data, additional data, etc., to the system controller 10. Herein, the map data acquisitor is not limited to the configuration of the above-described map data storage 6, and it may employ a configuration, such as a mobile telephone and a PHS (Personal Handyphone System), having a communicator to acquire map data, additional data, etc., sent from the base station via a radio medium and appropriately output the same to the system controller 10.

The manipulating portion 7 has various manipulating buttons (unillustrated) to appropriately operate the navigation system 1 such as, for example, an instruction to display a running condition, etc., of the vehicle. By inputting manipulation of these manipulation buttons, the manipulating portion 7 appropriately outputs an appointed signal to the system controller 10 so as to input and set contents of operation of the navigation system 1. Herein, as this manipulating portion 7, the configuration is not limited to inputting manipulation of the manipulating buttons and it may also employ a contraction wherein various conditions are inputted and set by inputting manipulation by use of a touch panel, or inputting manipulation by use of sound, etc.

The display portion 8 appropriately displays map data and additional data outputted from the map data storage 6, TV image data received by a TV receiver (unillustrated), and image data recorded on recording media such as an optical disk and a magnetic disk and read out by a drive. Concretely, a liquid crystal display, an organic EL (electroluminescence) display, a PDP (Plasma Display Panel), a CRT (Cathode-Ray Tube), etc., can be used.

The audio guidance portion 9 has a sounding portion such as, for example, a speaker (unillustrated). This audio guidance portion 9 informs, when guiding the running of the vehicle, a driver/passenger of various information concerning the running direction and running condition of the vehicle by sound from the sounding portion. Herein, the sounding portion can appropriately output, for example, TV audio data received by the TV receiver and audio data recorded on an optical disk and a magnetic disk, etc.

The system controller 10 has various input/output ports (unillustrated) such as a GPS receiving port to which the GPS receiver 2 is connected, a key input port to which the manipulating portion 7 is connected, a display portion control port to which the display portion 8 is connected, and an audio control port to which the audio guidance portion 9 is connected, for example.

This system controller 10 comprises, as a program deployed on an OS (Operating System) for motion control of the whole navigation system 1, a present position recognizer 15, a destination recognizer 16, a moving path finder 17, a position coordinator 18, and a presumed moving path finder 19.

The present position recognizer 15 calculates a plurality of present pseudo positions of the vehicle based on velocity data and azimuth angle data of the vehicle outputted from the velocity sensor 3 and the azimuth angle sensor 4. Furthermore, the present position recognizer 15 recognizes a present pseudo coordinate value of the vehicle based on GPS data concerning present position outputted from the GPS receiver 2. Then, the present position recognizer 15 compares the calculated present pseudo positions with the recognized present pseudo coordinate value, calculates a present position of the vehicle to indicate on map data to be displayed on the display portion 8, and recognizes the present position.

In addition, the present position recognizer 15 judges an inclination and a difference in elevation of a running road based on acceleration data of the vehicle outputted from the acceleration sensor 5, calculates a present pseudo position of the vehicle, and recognizes the present position. Therefore, the present position of the vehicle can be accurately recognized even at a place where overlapping occurs on a plane such as a crossing with an overpass or underpass or an expressway. Furthermore, when the vehicle runs on a mountain path and a slope, an accurate present position can be recognized by correcting an error between a moving distance acquired from only velocity data and azimuth angle data and an actual running distance of the vehicle by use of a detected inclination of the road.

In addition, the present position recognizer 15 calculates running data such as the velocity of the vehicle, a running direction, and a distance by which the vehicle has run based on velocity data, azimuth angle data, and acceleration data, etc. Furthermore, the present position recognizer 15 can recognize not only the above-mentioned present position of the vehicle as a present position but also a starting place, etc., to become an origin inputted and set by the manipulating portion 7 as a pseudo present position.

The destination recognizer 16 acquires destination information concerning a destination inputted and set by an inputting manipulation of the manipulating portion 7 and recognizes the position of the destination. As destination information to be inputted and set, various information for specifying the position such as coordinates including latitude and longitude, an address, a telephone number can be utilized.

The moving path finder 17 sets a moving path from the present position of the vehicle recognized by the present position recognizer 15 or the pseudo present position such as a starting place inputted and set by the manipulating portion 7 to the destination recognized by the destination recognizer 16. For setting this moving path, based on the map data, additional data acquired by the map data storage 6, for example, roads through which the vehicle can pass are searched, and a path with the shortest required time, or a path of a short moving distance, or a path in which traffic jams and places of traffic regulation are avoided is set. This set moving path is stored in a RAM (Random Access Memory) (unillustrated) provided in the system controller 10 and is also displayed on the display portion 8 in response to a setting input of the manipulating portion 7.

The position coordinator 18 examines coordination as to whether or not the present position recognized by the present position recognizer 15 is located on the moving path set by the moving path finder 17.

The presumed moving path finder 19 sets, in roads ahead in the running direction in running of the vehicle along the moving path, a presumed moving path from a diverging position on the moving path such as a crossing or a diverging point to the destination, via a path different from the moving path. Similar to the setting of a moving path by the moving path finder 17, setting of the presumed moving path is carried out based on the map data and additional data acquired by the map data storage 6. This set presumed moving path can be appropriately displayed on the display portion 8 in response to a setting input of the manipulating portion 7 in a displaying mode different from that of the moving path.

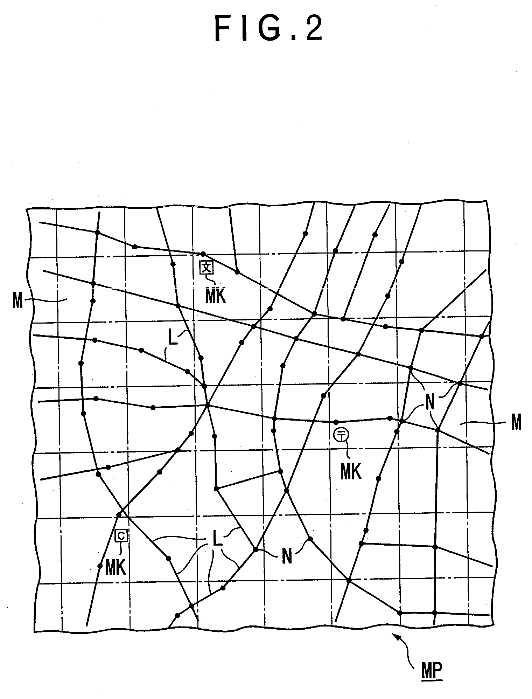

Now, map data will be described with reference to Fig. 2. Fig. 2 is a schematic view showing a data structure of map data.

In Fig. 2, MP denotes map data, and this map data MP includes a plurality of mesh data M to which unique numbers have been respectively added, for example. These mesh data M have a set length of a side, that is, a length determined by shortening an actual topographical length according to the contraction scale of the map. Thus, the map data MP is composed of a plurality of these mesh data M consecutively arranged lengthwise and crosswise.

Roads in the map data MP are constructed in the map data in a condition where, for example, two nodes N (black dots in Fig. 2) and a link L as a line segment to connect these nodes N are consecutively provided. Herein, nodes N correspond to nodal points between the respective roads such as intersections, bending points, diverging points, and junctions. Information concerning a node N include positional information of the position where the node exists, for example, latitude and longitude, a unique number added to each node N, and divergence information as to whether the node is at a diverging position such as a crossing or a diverging point where a plurality of links intersection. In addition, information concerning a link L includes a unique number (hereinafter, referred to as a link ID) added to each link L and node information such as unique numbers representing two nodes N which the link L connects.

In addition, in the map data MP, provided is notable place/object information including marks MK to indicate notable places and buildings and positional information such as longitude and latitude, etc., where these notable places and buildings are located. Furthermore, in the map data MP, provided is name information such as names of crossings, for example.

Moreover, in the map data MP, provided are a plurality of map data MP which indicate an identical region and have different contraction scales. In each of these map data MP having different contraction scales, the above-mentioned various information such as node information, link IDs, notable place/object information, and name information are provided.

### [Operations of navigation system]

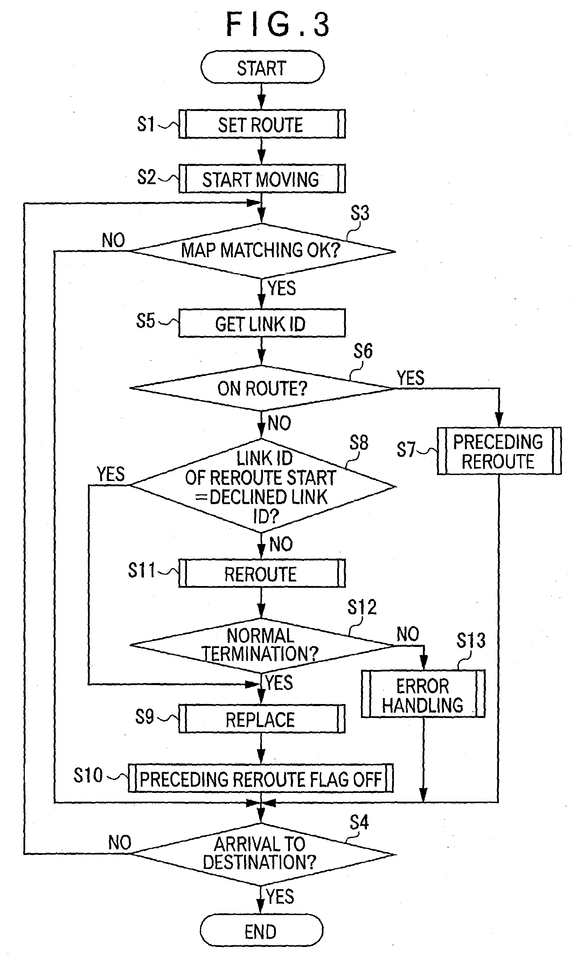

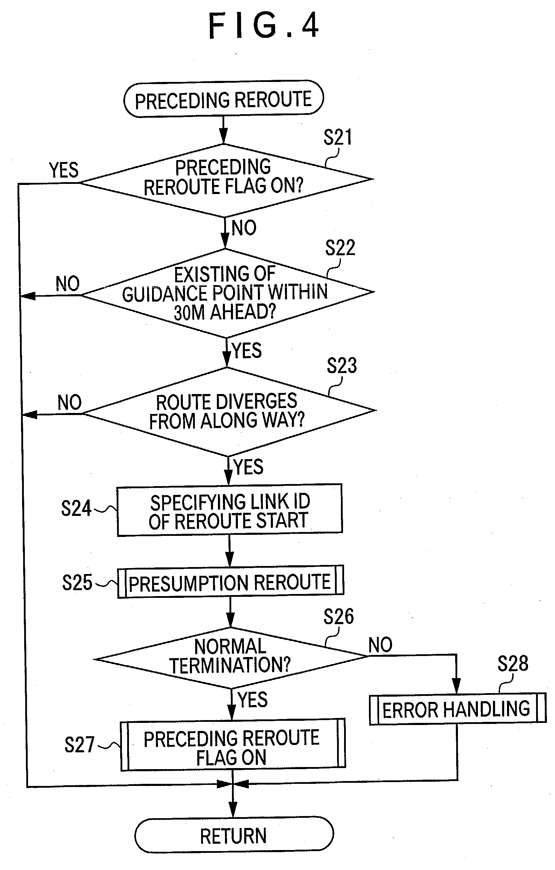

Now, operations of the above-described navigation system 1 will be described with reference to the flowcharts shown in Fig. 3 and Fig. 4. Fig. 3 is a flowchart showing operations for setting a moving path in a navigation system. Fig. 4 is a flowchart showing operations for setting a presumed moving path in a navigation system.

An accessory power supply is turned on by a driver or a passenger such as a front seat passenger in a vehicle, whereby electric power is supplied to the navigation system 1 for start-up. Then, the driver/passenger carries out an inputting manipulation of the manipulating portion 7 to set a moving path (step S1). In this moving path setting, a destination is set through an inputting manipulation of the manipulating portion 7. Then, the driver/passenger sets appointed conditions, for example, various route searching conditions for a time-saving route, a shortest-distance moving route, a traffic jam/regulation avoiding route, etc., whereby an appointed moving path to meet the conditions is set by the moving path finder 17.

Namely, a present position is recognized by the present position recognizer 15 based on GPS data, velocity data, azimuth angle data, and acceleration data. In addition, a destination is recognized by the destination recognizer 16 based on information concerning the destination set by the manipulating portion 7. Then, by the moving path finder 17, a moving path is set from the present position recognized by the present position recognizer 15 to the destination recognized by the destination recognizer 16 based on map data and additional data. Then, the system controller 10 stores the set moving path in a storage (unillustrated) and also appropriately displays the moving path together with map data MP on the display portion 8.

Thereafter, the driver/passenger drives the vehicle so that an indication indicating the present position displayed on the display portion 8 moves along the moving path (step S2). By this driving of the vehicle, the system controller 10 appropriately guides the moving by, for example, informing a turning point, etc., by the audio guidance portion 9 with a sound based on the map data and additional data.

In addition, the system controller 10 examines, while appropriately recognizing the present position by the present position recognizer 15, coordination as to whether or not the present position is located on the road, namely, the system controller 10 carries out so-called map matching (step S3). In this step S3, whether or not the present position is located on the road is judged by, for example, comparing information of the present position recognized by the present position recognizer 15 with a link ID of the road to determine whether or not they are consistent.

In this step S3, if it is judged that the present position is not located on the road, a correcting process is carried out so that the vehicle is appropriately located on the road, that is, a positional correction is carried out so that the vehicle is located on a road nearest to the present position recognized by the present position recognizer 15 and also whether the vehicle has arrived at the destination is judged (step S4). In this step S4, if it is judged that the vehicle has not arrived at the destination, the process returns to the step S3 again. If it is judged that the vehicle has arrived at the destination, the guiding process for moving the vehicle is completed.

On the other hand, in step S3, if it is judged that appropriate processes have being performed with the present position located on the road, an link ID of the road where the vehicle is currently located is acquired based on the link IDs of the map data MP or link IDs recorded in the storage (step S5).

After this step S5, whether or not the road where the vehicle is currently located is on the moving path set in step S 1 is judged by the position coordinator 18 (step S6). In this step S6, if it is judged by the position coordinator 18 that the vehicle is located on the moving path, the system controller 10 carries out preceding rerouting processes (which will be described later) (step S7), and the process proceeds to step S4.

In addition, in step S6, if it is judged by the position coordinator 18 that the vehicle is not located on the moving path, that is, that the vehicle is running in a manner deviated from the moving path, it is judged whether or not the vehicle is on a separately set presumed moving path (which will be described later) (step S8). Namely, whether or not the link ID of the road on which the vehicle is currently running, which has been acquired in step 5, coincides with the link ID of a separately set presumed moving path is judged.

Then, in this step S8, if the present position is located on the presumed moving path and it is judged that the present position of the vehicle has deviated to a presumed moving road, the preset presumed moving path is replaced as a moving path by the moving path finder 17 (step S9). Namely, the moving path which has already been stored in the storage is deleted and the preset presumed moving path is stored as a moving path in the storage. Thereafter, a process to turn off a flag, which indicates that a preceding rerouting process has not been performed (step S10), is carried out, then the process proceeds to step S4.

In addition, in step S8, if it is judged that the road on which the vehicle is currently running is not even a presumed moving road, a rerouting process to set a moving path from a position where the vehicle is currently located to a destination is carried out (step S11). For example, by use of the moving path finder 17, based on the azimuth angle data, a process to separately set a moving path from a point ahead in the running direction without making a U-turn or running in reverse is carried out.

Then, whether or not this rerouting process has normally been completed is judged (step S12), and if it is judged that the rerouting process has not normally been completed, for example, an error handling is executed to display, by the display portion 8, or to sound, by the audio guidance portion 9, a notice to the effect that rerouting could not normally be processed or a reason therefor so as to inform the driver/passenger that an error has occurred, and the process proceeds to step S4.

In addition, if it is recognized that the rerouting process has normally been completed in step S12, the process proceeds to the step S9, and a process to replace the preset moving path with a moving path obtained through the rerouting process is carried out. Thereafter, the above-mentioned step S10 is carried out, and the process proceeds to step S4.

Now, the above-mentioned preceding rerouting process in step S7 will be described with reference to Fig. 4.

In the preceding rerouting process, first, the system controller 10 judges whether or not a flag is ON, which indicates that a preceding rerouting process has already been completed (step S21). If flag-ON is recognized and it is judged that a preceding rerouting process has already been completed, the preceding rerouting process is ended and shifted to the processes shown in Fig. 3. In step S21, if it is judged that the flag is not ON, that is, that the flag is OFF, which indicates that the preceding rerouting process has not been completed, whether or not a guidance point exists within 30m ahead on the moving path from the present position is judged (step S22).

In this step S22, the guidance pointer, for example, a diverging position such as an intersection or a diverging point where a notice is given to the driver/passenger by an image or a sound during execution of the navigation process to guide running of the vehicle.

Moreover, the distance to judge the existence of a guidance point has been set to 30m. This distance has been empirically and experimentally determined and is a distance appropriately timed to start preceding rerouting at a diverging position nearest from the present position. However, this distance is not limited to 30m and may be appropriately set. In this guidance point recognition, a judgement whether or not a node N is located within a distance equivalent to 30m ahead of the present position is carried out based on the link ID of the road of the moving path on which the vehicle is currently running.

Then, in step S22, if it is judged that no guidance point exists within 30m, it is judged that the vehicle will continue running along the moving path, and the preceding rerouting process is ended to recognize the running condition and guide running and is shifted to processes shown in Fig. 3. In addition, in step S22, if it is judged that a guidance point exists within 30m, an informing process to provide information concerning the guidance point is carried out, and also, whether or not this guidance point is a diverging position is judged (step S23). This judgement is made from, for example, whether or not diverging point information is included in the node N of the guidance point recognized in step S22.

In this step S23, if it is judged that the guidance point is not a diverging position, it is judged that the vehicle will continue running along the moving path, and the preceding rerouting process is ended to recognize the running condition and guide running and is shifted to processes shown in Fig. 3. In step S23, if it is judged that the guidance point is a diverging position, in order to carry out a process to set a presumed moving path, a link ID of a road divergent from the moving path is acquired by means of the presumed moving path finder 19 based on the map data MP (step S24).

Moreover, in this step S23, if it is judged that a plurality of diverging positions exists within 30m, link IDs are acquired in order from a link ID of a road divergent at a diverging position nearest from the current position.

Then, while using the link ID acquired by the presumed moving path finder 19 in this step S24 as an origin, a presumed path rerouting process to set a presumed moving path to the destination is carried out (step S25). Thereafter, whether or not the presumed path rerouting process has been normally completed is judged (step S26). In a case where a plurality of link IDs have been acquired, presumed moving paths are set in order from a presumed moving path based on the link ID nearest from the present position.

In this step S26, if it is recognized that the presumed path rerouting process has been normally completed, the presumed moving path is stored in the storage, a flag to indicate that the preceding rerouting process has been completed is set ON (step S27), and the preceding rerouting process is ended to recognize the running condition and guide running and is shifted to processes shown in Fig. 3. In step S26, if it is recognized that the presumed path rerouting process has not been normally completed, an error handling is carried out to display, by the display portion 8, or to sound, by the audio guidance portion 9, a notice to the effect that rerouting could not normally been processed or a reason therefor so as to inform the driver/passenger of an error, and the preceding rerouting process is ended and is shifted to the processes shown in Fig. 3.

In such a manner, with running of the vehicle along the moving path, until the vehicle arrives at the destination, presumed moving paths to serve as routes deviated from the moving path are set in order from the nearest diverging position in roads ahead in the running direction, whereby a condition prepared for a deviation from the moving path is provided. Even in a condition where presumed moving paths have been already set, if the vehicle continues running without deviating into a presumed moving path, the presumed moving paths at diverging positions where the vehicle has already passed are removed, that is, deleted from the storage, whereby storage capacity is secured.

### [Effects of navigation system]

As has been mentioned above, in the navigation system 1 according to the present invention, a moving path from the present position recognized by the present position recognizer 15 to the destination set by the destination recognizer 16 is set by the moving path finder 17. In addition, with movement of the vehicle, by the presumed moving path finder 19, a presumed moving path from, in roads ahead in the running direction in running of the vehicle along the moving path, a diverging position on the moving path to the destination is set.

Accordingly, since the setting of a presumed moving path in case of deviation is carried out prior to the arrival of a vehicle at a diverging position deviated from a moving path, even if the vehicle is deviated from the moving path, the preset presumed moving path functions as a moving path, whereby running of the vehicle can be immediately supported, stable satisfactory running can be obtained, and convenience can be improved.

In addition, since, similar to the setting of the moving path by the moving path finder 17, the presumed moving path is set by routing from the link ID of a diverging road as an origin to the destination, a special construction to recognize deviation from the moving path in advance is unnecessary, therefore, without complicating the configuration, setting of the presumed moving path can be easily carried out.

In other words, by the presumed moving path finder 19, a presumed moving path is set based on the divergence information concerning a diverging position contained in a node N as part of information of roads where the vehicle can ran in the map data MP for setting a moving path by means of the moving path finder 17. Accordingly, since a presumed moving path is set based on the map data MP used for setting a moving path, a presumed moving path to support running of a vehicle in response to a deviation can be easily set with a simple configuration.

Furthermore, by the presumed moving path finder 19, before the vehicle arrives at a diverging position on the moving path, the diverging position is recognized and a presumed moving path is set. Consequently, since a presumed moving path has already been set at a point in time of deviation from the moving path, the presumed moving path can start to function as a moving path from the point in time of deviation and immediately support running of the vehicle, whereby stable satisfactory running can be obtained and convenience can be improved.

Then, if it is judged that the present position recognized by the present position recognizer 15 is located on the presumed moving path, by the moving path finder 17, the presumed moving path is replaced as a moving path. Consequently, even if the vehicle deviates from the moving path, since running of the vehicle is supported by using a presumed moving path function as a moving path, it is unnecessary to reset a moving path, therefore, a moving path to swiftly support running can be obtained by a simple configuration.

In addition, by the presumed moving path finder 19, set is a presumed moving path from a diverging position which is on the moving path in roads ahead in the running direction of the vehicle and is nearest from the present position of the vehicle. Consequently, it is unnecessary to set presumed moving paths from all diverging positions on the moving path, it is sufficient to set a presumed moving path, in order, in line with the moving state of the vehicle, therefore, the process load is reduced, thus processing efficiency in presumed moving path setting can be improved.

Furthermore, if it is recognized by the present position recognizer 15 that the vehicle passes through a diverging position to serve as an origin of a presumed moving path and moves along the moving path, by the presumed moving path finder 19, setting of the presumed moving path starting from this passed diverging position is released, that is, for example, the stored presumed moving path is deleted. Consequently, even if presumed moving paths are set, in order, in line with running of the vehicle, for example, settings of presumed moving paths which are not used to support running of the vehicle any longer are released in order, therefore, the load to set presumed moving paths can be reduced, whereby simplification of the configuration and an improvement in processing efficiency to set presumed moving paths can be easily realized.

Furthermore, the navigation system can also be applied in, for example, a server which acquires various information via a network and outputs the information to a terminal computer so as to support running of the vehicle, therefore, an expansion in application can also be promoted.

### [Other embodiments]

The present invention is not limited to the above-mentioned embodiments and may contain the following modifications, as well, as long as they achieve the object of the present invention.

Namely, a description has been given of a configuration loaded in a vehicle to support running of the vehicle, however, by being carried by a pedestrian, such a navigation system can also be used to guide movement of the pedestrian.

In addition, a description has been given of a configuration where the system controller 10 is loaded in a vehicle in a manner provided in a navigation system 1, however, it is also possible to provide the system controller 10 in a separate server, transmit data from various sensors loaded in a vehicle to the server via a communicator, compute a present position, a moving path, or a presumed moving path, etc., by a system controller 10 in the server, and transmit the computed result again to the communicator loaded in the vehicle for display on the display portion 8. In this case, configurations to be loaded in the vehicle are reduced and a reduction in weight and size can be easily realized. In addition, as mentioned above, by storing huge amounts of map data in the server by a combination with a configuration where map data acquired by the map data storage 6 is acquired from a base station via a communicator, a reduction in weight and size can be more easily realized.

If a moving path or a presumed moving path is obtained by means of this communicator, it is preferable to, for example, in the flowchart shown in Fig. 4, set the distance for a judgement of a guidance point in step S22 to a distance longer than 30m including a distance equivalent to duration of communication. Then, during the processes, it is preferable to perform a process to secure a line to the server, for example, before step S22, in greater detail, between step S21 and step S22.

In addition, a distance of 30m for a judgement of a guidance point can be appropriately changed as mentioned above, and variable setting can also be employed so that the distance becomes longer as the velocity increases.

Furthermore, a description has been given in the case where upon detection of a guidance point to be a diverging position nearest from the present position, that is, a diverging position within 30m, a process to set a presumed moving path is started, however, without detecting a guidance point, all moving paths or all of the presumed moving paths at all diverging positions within an appointed range may be computed in advance.

On the other hand, in the moving path, presumed moving path, and map matching processes, etc., a description has been given in the case where the processes have been carried out based on, as map data MP, information of roads where link IDs to connect nodes N are continuously arranged, however, information to determine a road is not limited to this information and any configuration can be employed. For example, in a case where a presumed moving path is set without using a link ID, it may be set based on coordinate information of a diverging position and directional information of the direction divergent from this diverging position.

In addition, the concrete structures and procedures when carrying out the present invention can be appropriately modified to other structures, etc., as long as they achieve the object of the present invention.

## Claims

1. A navigation device, comprising:
a present position recognizer for recognizing a present position of a movable body;
a destination recognizer for recognizing a destination to which said movable body moves;
a moving path finder for setting a moving path from the present position recognized by said present position recognizer to the destination recognized by said destination recognizer; and
a presumed moving path finder for setting a presumed moving path from a diverging position on said moving path in roads ahead in a moving direction of said movable body along the moving path set by said moving path finder to said destination, via a path different from said moving path.

2. The navigation device according to Claim 1, wherein
said presumed moving path finder completes setting of a presumed moving path before the movable body arrives at the diverging position on the moving path.

3. The navigation device according to Claim 1 or Claim 2, wherein
said presumed moving path finder sets a presumed moving path from a diverging position which is on the moving path in roads ahead in a moving direction of the movable body and is nearest from the present position of said movable body.

4. The navigation device according to any one of Claim 1 to Claim 3, wherein
said moving path finder searches and sets a moving path based on map data having moving road data concerning moving roads where the movable body can move, and
said presumed moving path finder sets a presumed moving path based on divergence information concerning a diverging position contained in the moving road data of said map data.

5. The navigation device according to any one of Claim 1 to Claim 4, wherein
said moving path finder sets, if it is judged that the present position recognized by the present position recognizer is located on a presumed moving path, the presumed moving path as a moving path.

6. The navigation device according to any one of Claim 1 to Claim 5, wherein
said presumed moving path finder releases, if it is recognized by the present position recognizer that the movable body passes through a diverging position of a presumed moving path and moves along a moving path, setting of said presumed moving path.

7. A navigation method for supporting movement of a movable body by a computer, comprising the steps of:
recognizing a present position of a movable body and a destination to which said movable body moves;
setting a moving path from the recognized present position to the recognized destination; and
setting a presumed moving path from a diverging position on said moving path in roads ahead in a moving direction of said movable body along the set moving path to said destination, via a path different from said moving path.

8. The navigation method according to Claim 7, wherein
said computer completes setting of a presumed moving path before the movable body arrives at the diverging position on the moving path.

9. The navigation method according to Claim 7 or Claim 8, wherein
said computer sets a presumed moving path from a diverging position which is on the moving path in roads ahead in a moving direction of the movable body and is nearest . from the present position of said movable body.

10. The navigation method according to any one of Claim 7 to Claim 9, wherein
said computer searches and sets a moving path based on map data having moving road data concerning moving roads where the movable body can move, and also sets a presumed moving path based on divergence information concerning a diverging position contained in the moving road data of said map data.

11. The navigation method according to any one of Claim 7 to Claim 10, wherein
said computer sets, if it is judged that the present position recognized by the present position recognizer is located on a presumed moving path, the presumed moving path as a moving path.

12. The navigation method according to any one of Claim 7 to Claim 11, wherein
said computer releases, if it is recognized by the present position recognizer that the movable body passes through a diverging position of a presumed moving path and moves along a moving path, setting of said presumed moving path.

13. A navigation program for making a computer implements the navigation method according to any one of Claim 7 to Claim 12.

14. A recording media with a navigation program recorded, in which the navigation program according to Claim 13 has been recorded so as to be readable by a computer.
